# FASCICULE DE BREVET EUROPEEN

(11) **EP 2 507 556 B1**
(45) Date de publication et mention de la délivrance du brevet: **25.12.2013**
(21) Numéro de dépôt: 10787729.2
(22) Date de dépôt: 29.11.2010
(51) Int. Cl.: C02F 1/66, F23G 5/08

(54) **PROCÉDÉ ET DISPOSITIF POUR LE TRAITEMENT DES DÉCHETS PAR INJECTION DANS UN PLASMA IMMERGÉ**
VERFAHREN UND EINRICHTUNG ZUR BEHANDLUNG VON ABFÄLLEN DURCH INJEKTION IN EINER EINGETAUCHTEN PLASMA
METHOD AND DEVICE FOR THE TREATMENT OF WASTE THROUGH INJECTION INTO AN IMMERSED PLASMA

(30) Priorité: 30.11.2009 FR 0958480
(43) Date de publication de la demande: 10.10.2012
(73) Titulaire: Commissariat à l'Énergie Atomique et aux Énergies Alternatives, 75015 Paris (FR)
(72) Inventeur: LEMONT, Florent, F-30400 Villeneuve-les-Avignon (FR); LAFON, Christophe, F-07700 Saint-Marcel d'Ardeche (FR); BARONNET, Jean-Marie, F-87000 Limoges (FR); BOUDESOCQUE, Nicolas, F-51480 Belval sous Chatillon (FR)
(74) Mandataire: Ilgart, Jean-Christophe
(86) Numéro de dépôt international: PCT/EP2010/068404
(87) Numéro de publication internationale: WO 2011/064361

(56) Documents cités:
- WO-A1-01/92784
- WO-A1-95/04004
- WO-A1-2004/087840
- GB-A- 2 152 949
- US-A1- 2009 118 561
- US-B1- 6 187 206

## Description

### DOMAINE TECHNIQUE

La présente invention concerne le domaine du traitement des déchets tels que les déchets chimiques avantageusement liquides.

Plus particulièrement, la présente invention propose un procédé de traitement des déchets chimiques basé sur la destruction de ces déchets par leur introduction directe dans un plasma immergé dans un réacteur rempli d'un liquide tel que de l'eau.

La présente invention concerne également un dispositif susceptible d'être mis en oeuvre dans le cadre de ce procédé.

### ÉTAT DE LA TECHNIQUE ANTÉRIEURE

Le traitement de déchets liquides de toutes sortes tels que des liquides organiques, dangereux et/ou radioactifs se fait aujourd'hui par des procédés thermiques mettant en jeu des réacteurs de type fours pouvant être de différentes natures comme des fours statiques ou des fours tournants, chauffés par différents moyens.

Ainsi, les procédés de traitement de déchets mettent en oeuvre des unités thermiques connectées à des systèmes de traitement des gaz relativement conséquents pour assurer le refroidissement, la filtration et la neutralisation de certains éléments comme le chlore. Ceci se traduit généralement par des unités de grande taille soumises à de hautes températures. La présence de certains éléments tels que le chlore, le phosphore, le soufre,... soumis à ces hautes températures exacerbe les propriétés corrosives des gaz, ce qui contraint les constructeurs soit à choisir des superalliages souvent très coûteux, soit à admettre un remplacement fréquent de certaines parties du procédé.

Les réacteurs mis en oeuvre peuvent être de différents types. Il peut s'agir de fours chauffés par effet joule, par torches à plasma ou par la combustion de carburants gazeux comme le propane. La température du traitement peut ainsi varier selon la nature de la charge. Si, par exemple, il s'agit d'hydrocarbures de type dodécane, cette charge peut développer une puissance thermique d'environ 10 kW par l/h, puissance qui devra être évacuée. Si, par contre, il s'agit d'une solution aqueuse, la puissance du plasma sera en partie utilisée pour assurer sa vaporisation. Le comportement en température du réacteur impliqué dans le procédé est donc sensiblement impacté par la nature du liquide à traiter.

Selon le procédé, l'introduction des liquides peut varier. Soit ils sont introduits au coeur de la zone chaude du four, soit ils sont introduits dans la source de puissance. Par exemple, ils peuvent être vaporisés dans le gaz combustible ou introduits directement dans un plasma. Ils peuvent être traités seuls ou en mélange avec des solides selon le cas. A titre d'exemple, la demande de brevet EP 469,737 propose un procédé et un dispositif de traitement de liquides dans un plasma aérien **[1].** Dans cet exemple, le plasma brûle dans un réacteur en réfractaire et les liquides sont introduits dans le flux gazeux générant le plasma. Un tel procédé nécessite un dispositif relativement lourd puisque les gaz produits doivent être traités via notamment des colonnes de lavage. Les documents GB 2152949 et WO 2004 087840 proposent aussi un procédé et un dispositif de traitement de liquides dans un plasma aérien.

De plus, quel que soit le procédé mis en oeuvre, il apparaît que la nature des liquides peut varier sensiblement pour des raisons de dégagements thermiques mais également pour des raisons de compatibilité avec les matériaux choisis pour réaliser le réacteur.

Plusieurs solutions au problème du traitement des déchets impliquant l'utilisation de plasmas immergés ont déjà été proposées. Par exemple, on peut citer la publication de N.V. Alekseev et *al.* relatant un procédé de traitement dans lequel un plasma jaillit dans un récipient contenant une solution aqueuse polluée par quelques dizaines de mg de phénol par litre d'eau [2]. Dans ce cas, le plasma sert à produire du peroxyde d'hydrogène qui oxyde les composés organiques dissous. La publication de G. Fortin et *al*. fait également mention d'un procédé mettant en jeu une torche à plasma d'argon/azote, brûlant au fond d'un réacteur rempli de lixiviats chargés en cyanures [3]. Une demande internationale a d'ailleurs été déposée par les mêmes auteurs pour protéger l'invention [4].

Dans tous les cas, ces procédés ont été développés pour traiter des solutions aqueuses contenant de faibles quantités de produits à éliminer : quelques ppm de phénol dans le premier cas, quelques ppm de cyanures dans le second. Les produits sont dégradés progressivement par la torche à plasma fonctionnant au coeur de la solution, torche qui produit les radicaux chimiques nécessaires à l'oxydation des composés organiques.

Par conséquent, il existe un réel besoin pour un procédé de traitement des déchets chimiques notamment liquides, amélioré en termes de rapidité et d'efficacité, susceptible de traiter des liquides et ce, quelles que soient leur nature et/ou leur composition, utilisant un dispositif plus simple, plus compact et moins onéreux dans sa réalisation et/ou dans son utilisation.

### EXPOSÉ DE L'INVENTION

La présente invention permet de remédier aux inconvénients et problèmes techniques listés ci-dessus. En effet, cette dernière propose un procédé et un dispositif de traitement des déchets notamment liquides basés sur l'injection-directe des déchets au coeur d'un plasma brûlant, immergé dans une solution distincte de la solution contenant les déchets. Pour rappel, dans les procédés de l'art antérieur utilisant un plasma immergé, ce dernier est établi au coeur des solutions à traiter.

Les travaux des inventeurs ont permis de montrer que l'injection directe des déchets dans le plasma permet leur destruction totale et instantanée alors que les expériences passées montrent que plusieurs dizaines de minutes **[3]** voire plusieurs heures sont requises pour la disparition des composés à éliminer **[2].**

Lorsque la torche à plasma mise en oeuvre dans le cadre de la présente invention fonctionne à l'oxygène, le panache ionisé obtenu est extrêmement réactif. L'oxydation se fait donc directement à son niveau et non par l'intermédiaire de radicaux actifs produits spécifiquement à cet effet.

De plus, le procédé de la présente invention peut fonctionner en continu par une circulation de la solution du réacteur dans une boucle assurant à la fois le refroidissement, une neutralisation et une filtration.

Plus particulièrement, la présente invention concerne un procédé de traitement d'une solution selon la revendication 1.

Par « traitement d'une solution S₁ », on entend dans le cadre de la présente invention diminuer la quantité de composants organiques, toxiques et/ou nocifs et stabiliser ceux qui peuvent être corrosifs et/ou radioactifs, ces composants étant présents dans la solution S₁ avant le traitement selon l'invention. Cette diminution peut impliquer l'élimination de ces composants et/ou leur transformation en composants moins nocifs.

Les composants organiques, toxiques, nocifs, corrosifs et/ou radioactifs susceptibles d'être présents dans la solution S₁ peuvent comprendre des métaux lourds ; des éléments radioactifs et des éléments organiques. A titre d'exemples non limitatifs, ces composants sont choisis dans le groupe constitué par le chlore, le fluor, le soufre, le zinc, le phosphore, le mercure, le plomb, le cadmium, l'arsenic, le phénol, les cyanures, les ferrocyanures, les oxalates, les acides humiques, le strontium, le ruthénium, le césium, des émetteurs α, tels que l'américium, le plutonium et l'uranium et leurs mélanges. Avantageusement, au moins 70%, au moins 80%, au moins 90%, au moins 95%, au moins 96%, au moins 97%, au moins 98%, au moins 99% ou voire la totalité des composants chimiques initialement contenus dans la solution S₁ sont éliminés et/ou transformés en composants moins nocifs suite au traitement de l'invention.

La solution S₁ mise en oeuvre dans le cadre de la présente invention peut être toute solution liquide, avantageusement organique, susceptible de contenir au moins un composant organique, toxique, nocif, corrosif et/ou radioactif tel que précédemment défini. La solution S₁ peut se présenter sous forme d'un liquide organique pur ou en mélange, un liquide radioactif, une émulsion, une micro-émulsion, une solution aqueuse, une suspension de composés notamment organiques dans une solution aqueuse, un liquide contenant des particules issues de la pulvérisation d'un solide ou un déchet liquide.dangereux.

Plus particulièrement, la solution S₁ peut être tout type de solution contenant des matières organiques liées ou non à des minéraux. Une telle solution peut provenir de toutes les applications civiles, nucléaires ou non, ou de toutes les applications militaires, nucléaires ou non. A titre d'exemples non limitatifs, la solution S₁ peut être choisie dans le groupe constitué par une solution issue de stations d'épuration ou de boues de stations d'épuration, des eaux usées, des huiles usagées, des effluents liquides ménagers, des effluents liquides médicaux ou hospitaliers, des effluents liquides industriels et des effluents liquides provenant d'installations nucléaires Dans la présente invention, les expressions « solution S₁ », « solution liquide S₁ », « liquide à traiter » ou « solution à traiter » sont équivalentes et utilisables de façon interchangeable.

Le procédé selon la présente invention met en oeuvre un plasma. Pour rappel, le plasma est un gaz à l'état ionisé, classiquement considéré comme un quatrième état de la matière. Pour obtenir l'ionisation d'un gaz à la pression atmosphérique, on utilise des torches à plasma.

Avantageusement, le plasma mis en oeuvre dans le cadre de la présente invention est un plasma d'arc. Plus particulièrement, le plasma mis en oeuvre dans le cadre de la présente invention est un plasma d'arc soufflé.

La solution S₂ mise en oeuvre dans le cadre de la présente invention est la solution dans laquelle le plasma utilisé dans le procédé est immergé.

Tout d'abord, la solution S₂ dans laquelle le plasma est immergé assure le refroidissement du dispositif (i.e. du réacteur) sans obligatoirement nécessiter des éléments supplémentaires pour refroidir les parois du réacteur. Cette solution S₂ a également un rôle dans le traitement des gaz émis puisqu'elle assure la trempe, le dépoussiérage et la neutralisation des gaz produits et la condensation des volatils produits. La solution S₂ fait donc office de refroidisseur, de filtre et de colonne de lavage.

La solution S₂ est une solution aqueuse ou saline et avantageusement de l'eau. La solution S₂ peut en outre contenir au moins un additif assurant la destruction des matières organiques résiduelles. Un tel additif est un catalyseur assurant une dégradation poussée des matières organiques résiduelles. Ces catalyseurs peuvent, par exemple, activer des réactions de Fenton activées par le rayonnement plasma. Il peut s'agir de réactifs de Fenton assurant la production de radicaux sous le rayonnement plasma. De plus, le pH de la solution S₂ peut être maintenu à une valeur proche de la neutralité. Dans la présente invention, les expressions « solution S₂ », « solution liquide S₂ » et « solution du réacteur » sont équivalentes et utilisables de façon interchangeable.

La solution S₂ est non seulement distincte de la solution S₁ mais aussi ne correspond pas à une solution liquide issue du traitement de déchets notamment liquides tels qu'une solution S₁ ou résultant d'un tel traitement, comme, par exemple, une solution contenant des déchets partiellement traités pouvant provenir d'un traitement préalable de déchets liquides, un bain de fusion issu du traitement des déchets, une couche métallique d'un tel bain de fusion ou une couche de laitiers d'un tel bain de fusion. La définition de la solution S₂ ci-dessus s'entend évidemment au moment où cette dernière est mise en oeuvre i.e. au moment où le plasma y est immergé et préalablement à l'injection de la solution S₁.

Le procédé selon la présente invention comprend avantageusement les étapes successives consistant à :
a) générer un plasma tel que précédemment défini ;
b) immerger le plasma généré à l'étape (a) dans une solution S₂ telle que précédemment définie ;
c) introduire la solution S₁ telle que précédemment définie dans le plasma ainsi immergé.
Les étapes (a), (b) et (c) sont réalisées de façon successive.

L'étape (a) du procédé selon l'invention consiste à générer un plasma et notamment un plasma à arc soufflé à partir d'une torche à plasma. Avantageusement, une décharge électrique est produite au niveau de la torche à plasma constituée d'électrodes alors qu'un gaz plasmagène passe entre ces électrodes, ce qui génère le plasma.

Le gaz plasmagène utilisable peut être tout gaz connu de l'homme du métier. Il peut varier selon la technologie de torche à plasma utilisée. Dans le cadre de la présente invention, le gaz plasmagène comporte un gaz oxydant nécessaire à la réactivité du plasma et/ou un gaz neutre nécessaire à la protection de la cathode de la torche.

Dans une première variante, le gaz plasmagène ne comporte qu'un gaz oxydant. Cette variante utilise une torche ne nécessitant pas de gaz neutre de protection. Le gaz oxydant peut ainsi être choisi dans le groupe constitué par l'oxygène, l'air, le dioxyde de carbone et leurs mélanges. Le gaz oxydant est avantageusement de l'oxygène.

Dans une seconde variante, le gaz plasmagène comporte un gaz oxydant tel que précédemment défini et un gaz neutre. Le gaz neutre est notamment choisi dans le groupe constitué par l'argon, l'hélium, l'azote et leurs mélanges. Avantageusement, le plasma obtenu est choisi dans le groupe constitué par un plasma argon/oxygène, un plasma hélium/oxygène, et un plasma azote/oxygène.

Dans une troisième variante correspondant notamment au cas où une gazéification non oxydante est recherchée lors de l'étape (c) du procédé, le plasma fonctionne uniquement au gaz neutre tel que précédemment défini et notamment à l'argon et ne nécessite pas d'ajout d'oxygène. Si une oxydation est requise pour détruire des composants organiques contenus dans la solution S₁, alors un flux d'oxygène peut être ajouté afin de produire un plasma gaz neutre/oxygène.

Dans une quatrième variante, le gaz plasmagène est un gaz d'exhaure recyclé vers la torche à plasma. Un tel gaz comporte avantageusement les composés CO₂/O₂/Argon. Dans cette variante, des technologies de torches utilisant couramment des anodes et cathodes en cuivre refroidi peuvent être envisagées. D'autres métaux comme du tungstène peuvent être envisagés selon les modes d'exploitation choisis. Ainsi, dans cette quatrième variante, le plasma mis en oeuvre recycle tout ou partie des gaz émis par le procédé comme gaz plasmagène.

L'étape (b) du procédé selon la présente invention consiste à remplir le réacteur dans lequel a été généré le plasma lors de l'étape (a) avec la solution S₂. Lors du remplissage du réacteur, ce dernier n'est pas complètement rempli par la solution S₂.

La solution S₂, lors de l'étape (b), a une température comprise entre 20 et 60°C et, notamment à une température régulée autour de 30°C ± 5°C. Par conséquent, la température du réacteur relativement élevée suite à l'étape (a) est abaissée, avantageusement jusqu'à la température de la solution (S₂). On peut donc parler dans la présente invention de « réacteur froid ».

Dès le plasma initié, le réacteur doit être rempli rapidement pour éviter l'échauffement du système.

L'étape (c) du procédé selon la présente invention consiste à mettre en contact la solution S₁ avec le coeur du plasma pour que le traitement tel que précédemment défini ait lieu de façon instantanée.

Ainsi, la solution S₁ peut être introduite ou injectée dans le plasma et notamment le coeur du plasma via des canaux aménagés dans la torche à plasma.

En variante, la solution S₁ peut être introduite ou injectée dans le plasma et notamment le coeur du plasma via un dispositif externe approchant le plasma au plus prêt.

Quelle que soit la variante mise en oeuvre, la vitesse d'introduction de la solution S₁ dépendra de la puissance du plasma utilisée et de la nature de la solution S₁. Selon le cas, elle pourra atteindre plusieurs dizaines de litres par heure.

L'introduction de la solution S₁ lors de l'étape (c) peut se faire en continu ou de façon séquentielle par une alternance de moments avec et sans introduction de solution.

L'étape (c) du procédé selon la présente invention peut durer de quelques minutes à plusieurs heures voire plusieurs jours. Ainsi, l'étape (c) du procédé selon la présente invention peut être réalisée 24 h/24 pendant des durées cohérentes avec la durée de vie de la torche à plasma.

Comme précédemment expliqué, la réaction de gazéification, de combustion et/ou d'oxydation des composants de la solution S₁ a lieu de façon instantanée dans le plasma dès la mise en contact de la solution S₁ avec ce dernier.

Durant l'étape (c) du procédé selon la présente invention, les gaz dissociés une fois sortis du plasma doivent être rapidement neutralisés et trempés notamment pour éviter la formation de molécules complexes toxiques telles que furannes ou dioxines. C'est la solution S₂ qui assure ces fonctions. De même, les poussières et les composés volatils de la réaction de gazéification, de combustion et/ou d'oxydation sont respectivement éliminés et condensés grâce à la solution S₂.

Le procédé selon la présente invention comprend une étape supplémentaire consistant à filtrer, refroidir et/ou neutraliser ladite solution S₂. Il convient de souligner que le fonctionnement de la torche à plasma et les réactions intervenant durant l'étape (c) du procédé selon la présente invention peuvent provoquer un échauffement de la solution S₂ située dans le réacteur.

Aussi, afin de diminuer la pression de vapeur saturante, le procédé selon la présente invention peut comprendre une étape supplémentaire consistant à refroidir la solution S₂. Cette étape supplémentaire peut avoir lieu pendant ou après l'étape (c) du procédé. Avantageusement, le refroidissement de la solution S₂ est mis en oeuvre simultanément à l'étape (c) du procédé.

Tout système apte à diminuer la température d'un liquide est utilisable pour cette étape de refroidissement. Avantageusement, cette étape met en oeuvre une boucle parallèle de traitement impliquant un échangeur ou un aéroréfrigérant.

Un filtre assurant le blocage des particules minérales issues du traitement et de la destruction de la solution S₁ est avantageusement mis en place sur la boucle, en amont de l'échangeur servant à refroidir la solution S₂.

Enfin, lorsque le procédé de traitement selon la présente invention est terminé, le réacteur est purgé de la solution S₂ laissant ainsi le plasma émerger pendant une courte durée, durée nécessaire pour assurer le séchage des pièces surmontant la torche afin d'éviter que de la solution S₂ ne pénètre dans sa tuyère. Ce temps d'émersion produit un échauffement normal du réacteur. La durée durant laquelle le plasma est émergé doit être rapide mais suffisante pour assurer le séchage des pièces surmontant la torche. Elle peut être comprise entre 10 sec et 5 min.

Une fois la torche éteinte, l'alimentation en gaz plasmagène(s) doit être maintenue pour assurer un séchage total de la torche. Cette alimentation peut être maintenue pendant une durée supérieure à 10 min.

La présente invention concerne également un dispositif susceptible d'être mis en oeuvre dans le cadre du procédé selon la présente invention. Ce dispositif comprend
- un réacteur ;
- une torche à plasma et notamment une torche à plasma à arc soufflé ;
- des 1^{ers} moyens aptes à amener la solution S₂ telle que précédemment définie dans ledit réacteur ;
- des 2^{nds} moyens aptes à introduire (ou injecter) la solution S₁ telle que précédemment définie dans le plasma généré à partir de ladite torche à plasma, ces 2^{nds} moyens étant différents des 1^{ers} moyens précités ; et
- des moyens aptes à alimenter la torche à plasma avec au moins un gaz plasmagène tel que précédemment défini.

Le réacteur du dispositif selon l'invention peut être d'une forme et d'un volume quelconques. Comme précédemment expliqué, la solution S₂ assure le refroidissement du réacteur, ce dernier n'a donc pas obligatoirement besoin d'être réalisé dans un matériau apte à résister à des températures très élevées puisqu'il est froid. Avantageusement, il est en acier inoxydable.

Toute torche à plasma et notamment toute torche à plasma à arc soufflé est utilisable dans le cadre de la présente invention. La puissance et l'intensité de la torche à plasma mise en oeuvre dans le cadre de la présente invention seront choisies en fonction de la solution S₁ à traiter et du débit à injecter. De plus, le dispositif selon la présente invention comprend en outre des moyens aptes à appliquer un courant électrique ou un potentiel donné à la torche à plasma et plus particulièrement aux électrodes constituant cette torche à plasma.

Les moyens aptes à amener la solution S₂ dans le réacteur, aptes à introduire (ou injecter) la solution S₁ dans le plasma généré et aptes à alimenter la torche à plasma avec un gaz plasmagène et éventuellement un gaz secondaire peuvent être un quelconque moyen permettant d'amener un fluide liquide ou gazeux dans un compartiment. Parmi ces moyens, on peut citer des pompes d'alimentation en liquide, des pompes d'alimentation en gaz et des moyens d'alimentation en liquide par pression hydrostatique.

Ces moyens sont connectés au réacteur et/ou à la torche plasma par une tuyauterie en matière souple ou en matière rigide.

Les moyens aptes à introduire (ou injecter) la solution S₁ dans le plasma généré à partir de ladite torche à plasma peuvent impliquer des canaux aménagés dans une pièce placée en bout de la torche à plasma.

Cette pièce qui constitue un composant additionnel du réacteur et qui est fixée à ce dernier par tout moyen approprié se situe avantageusement dans le prolongement de l'anode de la torche à plasma afin de former une zone de combustion additionnelle présentant une forme de fourreau ou de tuyère. Les parois de cette pièce peuvent être en métal refroidi par une circulation interne d'eau. Le métal sera choisi inoxydable. Cette pièce permet d'allonger le temps de séjour des gaz et de protéger la combustion d'une trempe trop rapide dans la solution S₂. Avantageusement, Les canaux aptes à introduire (ou injecter) la solution S₁ dans le plasma que présente cette pièce peuvent également être aptes à amener du gaz oxydant. En variante, cette pièce peut présenter deux types de canaux distincts, les uns étant aptes à amener du gaz oxydant et les autres à introduire la solution S₁.

Une autre variante concernant les moyens aptes à introduire (ou injecter) la solution S₁ dans le plasma généré à partir de ladite torche à plasma peut mettre en oeuvre un dispositif externe approchant le plasma au plus prêt. Il peut s'agir d'une buse projetant un jet de solution S₁ à l'intérieur du plasma.

Enfin, les moyens aptes à alimenter la torche à plasma avec au moins un gaz plasmagène et éventuellement avec au moins un gaz secondaire peuvent impliquer des canaux débouchant entre l'anode et la cathode de la torche à plasma et/ou des canaux aménagés dans l'anode et/ou la cathode.

Lorsque le dispositif selon la présente invention fonctionne, les gaz générés suite à la gazéification, à la combustion et/ou à l'oxydation bullent dans la solution S₂ où ils sont trempés et épurés de leurs poussières et des espèces chimiques neutralisables telles que HCl, SO₂, SO₃, NO₂, NO₃ et P₂O₅. Avant d'être rejetés à l'extérieur du dispositif et notamment dans le milieu extérieur, ils passent avantageusement dans un condenseur puis éventuellement dans un filtre.

Ainsi, le dispositif selon la présente invention peut comprendre un condenseur et éventuellement un filtre à air. Avantageusement, le condenseur et éventuellement le filtre sont montés dans la partie supérieure du réacteur.

Le condenseur qui a également un rôle de dévésiculeur utilisable dans le cadre de la présente invention est avantageusement un condenseur à fluide séparé dans lequel un fluide distinct des gaz de combustion et notamment un fluide de réfrigération provenant d'un dispositif frigorifère est maintenu à une température inférieure à celle du (ou des) gaz entrant dans la chambre de combustion. Le condenseur utilisable dans le cadre de la présente invention peut être un condenseur de type échangeur tubulaire de chaleur ou à évaporateur.

Tout type de filtre à air est utilisable en sortie du condenseur dans le cadre de la présente invention. Toutefois, afin d'assurer une filtration de haute efficacité, un filtre de type filtre à charbon actif, filtre en microfibres de verre ou filtre en polytétrafluoroéthylène est utilisable. A titre d'exemples, on peut citer un filtre à panneaux Megalam^{®} ou un filtre à air Micretain^{®}.

Le fonctionnement de la torche à plasma ainsi que la gazéification, la combustion et/ou l'oxydation des composants de la solution S₁ provoquent un échauffement de la solution S₂. Par conséquent, afin de diminuer la pression de vapeur saturante, le dispositif selon la présente invention peut comprendre un système apte à assurer le refroidissement de la solution S₂. De plus, le dispositif selon la présente invention peut comprendre en outre un système apte à assurer la filtration de la solution S₂.

Ainsi, le dispositif selon la présente invention comprend avantageusement un échangeur muni en amont d'un filtre. L'échangeur utilisable dans le cadre de la présente invention est un échangeur de chaleur de type double-flux dans lequel la solution S₂ échange de la chaleur avec un autre flux liquide ou gazeux de façon à maintenir la température de la solution S₂ à un niveau limitant la tension de vapeur à la surface du réacteur. Cet échangeur de chaleur peut être un échangeur en tube en U, un échangeur à faisceau tubulaire horizontal ou vertical, un échangeur à spirale ou un échangeur à plaque.

Un filtre est avantageusement placé en amont de l'échangeur pour récupérer les poussières issues de la combustion et tout solide issu de la précipitation des minéraux présents dans la solution S₁.

Le filtre mis en oeuvre dans le cadre du dispositif selon l'invention comprend au moins une membrane avantageusement du type nanofiltration, microfiltration ou ultrafiltration. Ces membranes sont définies par des tailles de pores inférieures à la taille moyenne particulaire des poussières et solides, classiquement de l'ordre du micromètre jusqu'à la dizaine de nanomètres.

Lors du traitement, la solution S₂ peut devenir acide ou basique selon le cas. Aussi, le dispositif selon la présente invention peut comprendre en outre des moyens aptes à contrôler et ajuster le pH de la solution S₂.

Ces moyens peuvent comprendre une électrode de mesure du pH placé dans le réacteur ou dans un circuit externe au réacteur mais connecté à ce dernier. La mesure du pH peut être effectuée en continu ou par intermittence. L'électrode de mesure du pH est connectée, directement ou indirectement, à des moyens aptes à ajouter un acide ou une base à la solution S₂.

Pour résumer, les avantages de la présente invention sont multiples et proviennent de la capacité du dispositif et notamment du réacteur à assurer simultanément plusieurs opérations unitaires qui sont :
- la destruction de la solution à traiter i.e. la solution S₁ injectée au coeur d'un plasma brûlant dans une solution distincte de la solution à traiter i.e. la solution S₂,
- la trempe quasi-instantanée des gaz dans la solution S₂,
- la condensation quasi-instantanée des volatils,
- le dépoussiérage des gaz par effet de lavage,
- la neutralisation des gaz lors du bullage.

Cette accumulation de fonctions assure une simplification très sensible du système de traitement des gaz puisque :
- le système de refroidissement n'est plus obligatoire ;
- la présence de composés condensables dans les gaz est supprimée au même titre que les solides et les précipités qui ont été retenus dans la solution S₂. La filtration peut donc être limitée à un filtre de très haute efficacité dans le cas où les normes de rejets sont poussées à l'extrême ;
- les systèmes de lavage des gaz ne sont plus nécessaires.

Il en résulte un système extrêmement simplifié et compact dans lequel subsiste un réacteur suivi d'un condenseur. Un échangeur précédé d'un filtre est ajouté en parallèle au réacteur pour assurer un maintien en température de la solution de traitement i.e. la solution S₂.

Un dernier avantage consiste en un maintien du système à basse température, ce qui permet une parfaite maîtrise de la corrosion et une limitation des coûts liés à un vaste choix de matériaux pour le réacteur financièrement plus accessibles. Le réacteur peut par exemple être construit en acier inox à double paroi refroidie.

Le refroidissement non obligatoire lors du procédé de traitement assure dans ce cas une fonction de sécurité lors des phases de démarrage et d'arrêt mais également en cas de purge accidentelle du réacteur. Les substances susceptibles de se déposer passent directement dans la solution S₂ et sont piégées dans le filtre mis en série avec l'échangeur.

D'autres caractéristiques et avantages de la présente invention apparaîtront encore à l'homme du métier à la lecture des exemples ci-après- donnés à titre illustratif et non limitatif, en référence aux figures annexées.

### BRÈVE DESCRIPTION DES DESSINS

La Figure 1 est une vue générale et schématique d'un dispositif de traitement des déchets liquides selon la présente invention.
La Figure 2 est une vue plus détaillée d'une torche plasma à arc soufflé susceptible d'être utilisée dans un dispositif de traitement des déchets liquides selon la présente invention.

### EXPOSÉ DÉTAILLÉ DE MODES DE RÉALISATION PARTICULIERS

### I. Dispositif

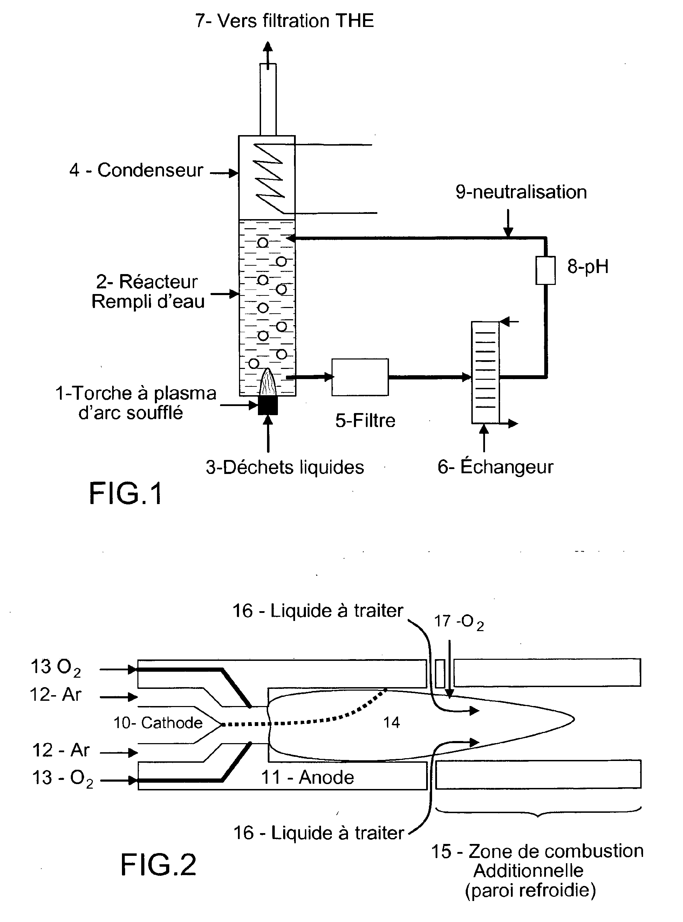

La Figure 1 illustre la description fournie ci-dessous. La présente invention est basée sur l'utilisation d'un plasma d'arc soufflé (1) immergé dans un réacteur de forme cylindrique et d'un volume de 50 L, rempli d'eau (2). Le produit liquide à traiter (3) tel qu'un mélange d'hydrocarbure phosphoré est introduit dans le plasma par un système de canal aménagé dans la torche qui fonctionne à l'oxygène. Une fois dans le plasma, le liquide est instantanément porté à très haute température de l'ordre de 2000°C en présence d'oxygène, ce qui a pour conséquence la destruction totale des matières organiques.

La Figure 2 représente la torche à plasma utilisée. Il s'agit d'une torche à plasma classique dans laquelle une cathode réfractaire (10) en tungstène, de forme conique, protégée par un courant d'argon (12) génère un arc électrique vers une anode (11). L'anode (11) se présente sous forme d'un fourreau d'une longueur de 10 cm et d'un diamètre de 10 mm. Cet arc est soufflé par un flux d'argon (12) et d'oxygène (13). Dans le cas où une gazéification non oxydante est recherchée (par exemple pour assurer la production d'un gaz de synthèse de type CO/H₂), le plasma fonctionne uniquement à l'argon et ne nécessite pas d'ajout d'oxygène. Si l'oxydation est requise pour détruire des composants organiques, alors un flux d'oxygène (13) est ajouté afin de produire un plasma (14) argon/oxygène. Le liquide à traiter est injecté à une vitesse d'1 L/h via des canaux (16) aménagés dans une pièce placée en bout de la torche à plasma. Cette pièce peut comporter une zone de combustion additionnelle (15) éventuellement alimentée par un ajout d'oxygène (17) afin d'assurer une combustion complète des gaz, combustion qui pourrait être bloquée par une trempe trop rapide dans la solution du réacteur. Cette zone de combustion consiste en une tuyère refroidie par circulation interne d'eau, dont les parois sont en cuivre et dont le volume est de l'ordre de 0,02 L.

Les gaz issus de la combustion bullent dans la solution du réacteur dans laquelle ils sont instantanément trempés. Lors du bullage, les gaz sont épurés de leurs poussières et des espèces chimiques neutralisables telles que HCl, SO₂, SO₃, NO₂, NO₃, et P₂O₅. Ils passent ensuite à travers un condenseur (4) qui sert également de dévésiculeur puis sont évacués vers l'extérieur.

Selon le niveau d'épuration demandé, les gaz peuvent subir une filtration de très haute efficacité (7) pour empêcher toute sortie de particules. Ce filtre est optionnel. Toutefois, il peut devenir nécessaire notamment lors du traitement de déchets radioactifs.

Le condenseur (4) constitue la partie supérieure du réacteur. Il est muni d'un ou de plusieurs serpentins de refroidissement baignant dans un garnissage assurant un bon brassage des gaz et la coalescence des gouttelettes d'eau.

Le fonctionnement de la torche à plasma ainsi que la combustion des matières organiques provoquent un échauffement de l'eau située dans le réacteur. Afin de diminuer la pression de vapeur saturante, l'eau est refroidie en boucle à travers un échangeur (6). Sa température est maintenue à un niveau limitant la tension de vapeur à la surface du réacteur. Le circuit de refroidissement est muni en amont de l'échangeur (6) d'un filtre (5) assurant la récupération des solides provenant de la précipitation des minéraux présents dans les effluents à traiter. Cette boucle filtration - refroidissement soutire la solution dans la partie basse du réacteur et la réintroduit dans sa partie haute.

Lors du traitement, la solution du réacteur peut devenir acide ou basique selon le cas. Un suivi en ligne du pH (8) permet un ajustement continu de cette mesure par ajout d'un acide ou d'une base selon le cas (9).

### II. Fonctionnement et performances

Le réacteur est démarré à vide. Une fois la torche à plasma initiée, le réacteur est rempli d'eau, ce qui fait chuter instantanément la température à la température ambiante. Le mélange d'hydrocarbure phosphoré est alors introduit dans le plasma soit par des canaux aménagés dans la torche à plasma, soit par un dispositif externe approchant le plasma au plus prêt. Le traitement se fait de manière continue dans la solution qui est filtrée et refroidie dans une boucle parallèle de traitement.

A la fin du traitement, le réacteur est purgé de sa solution laissant ainsi le plasma émerger pendant environ une minute, temps nécessaire pour assurer le séchage des pièces surmontant la torche afin d'éviter que de l'eau pénètre dans sa tuyère. Ce temps d'émersion produit un échauffement normal du réacteur de l'ordre de 100°C.

Les essais réalisés ont été menés avec une torche de 45 kW délivrant une intensité stable de 200 A sur toute la durée des expérimentations et une tension stable voisine de 220 V.

Le traitement de 1 L/h d'un mélange d'hydrocarbure phosphoré a permis, après analyse de la solution recueillie, de constater un rendement de destruction de 99,98% avec un phosphore totalement dissous. Dans le cas mentionné, la solution récupérée est une solution d'acide phosphorique qui peut facilement être neutralisée par une base assurant la précipitation de phosphate sodique.

Le rendement de destruction de 99,98% peut être amélioré en augmentant le volume de la tuyère de combustion pour allonger le temps de séjour des gaz et en ajoutant dans la solution S₂ des catalyseurs assurant une dégradation continue des matières organiques résiduelles sous l'impact du rayonnement plasma. Des réactions de type Fenton peuvent être envisagées.

### RÉFÉRENCES

**[1]** Demande de brevet EP 469737 (Tioxide Group Services Limited) *"Destruction process"* publiée le 5 février 1992.
**[2]** Alekseev N.V., Samokhin A.V., Belivtsev A.N. and Zhavoronkova V.I., (2000) "Thermal-Plasma Jet Oxidation of Phenol in Aqueous Solutions", High Energy Chemistry, Vol. 34, N° 6, pp. 389-393
**[3]** Fortin L., Soucy G., Kasireddy V., Bernier J.-L., Boulos M.I (1999) "The Use of Thermal Plasma for Wastewater Treatment", 14th International Symposium on Plasma Chemistry - ISPC'14, Prague (Czech Republic), pp. 2387-2392
**[4]** Demande internationale WO 97/22556 (Alcan International Limited) *"Thermal Plasma Reactor and Wastewater Treatment Method"* publiée- le 26 juin 1997.

## Revendications

1. Procédé de traitement d'une solution liquide désignée solution S₁ comprenant une étape consistant à injecter ladite solution Si au coeur d'un plasma immergé dans une seconde solution liquide désignée solution S₂ distincte de ladite solution S₁.

2. Procédé selon la revendication 1, **caractérisé en ce que** ladite solution S₁ est une solution contenant des matières organiques liées ou non à des minéraux, ladite solution pouvant éventuellement être choisie dans le groupe constitué par une solution issue de stations d'épuration ou de boues de stations d'épuration, des eaux usées, des huiles usagées, des effluents liquides ménagers, des effluents liquides médicaux ou hospitaliers, des effluents liquides industriels et des effluents liquides provenant d'installations nucléaires.

3. Procédé selon la revendication 1 ou 2, **caractérisé en ce que** ledit plasma est un plasma d'arc soufflé.

4. Procédé selon l'une quelconque des revendications 1 à 3, **caractérisé en ce que** ladite solution S₂ est une solution aqueuse ou saline et avantageusement de l'eau.

5. Procédé selon l'une quelconque des revendications précédentes, **caractérisé en ce que** ladite solution S₂ contient au moins un additif assurant la destruction des matières organiques résiduelles.

6. Procédé selon l'une quelconque des revendications précédentes, **caractérisé en ce qu'**il comprend les étapes successives consistant à :
a) générer un plasma tel que défini à la revendication 1 ou 3 ;
b) immerger le plasma généré à l'étape (a) dans une solution S₂ telle que définie à la revendication 1, 4 ou 5 ;
c) introduire la solution S₁ telle que définie à la revendication 1 ou 2 au coeur du plasma ainsi immergé.

7. Procédé selon l'une quelconque des revendications précédentes, **caractérisé en ce que** ledit plasma est choisi dans le groupe constitué par un plasma argon, un plasma hélium, un plasma azote et un plasma d'un de leurs mélanges.

8. Procédé selon l'une quelconque des revendications 1 à 6, **caractérisé en ce que** ledit plasma est choisi dans le groupe constitué par un plasma argon/oxygène, un plasma hélium/oxygène et un plasma azote/oxygène.

9. Procédé selon l'une quelconque des revendications 1 à 6, **caractérisé en ce que** ledit plasma recycle tout ou partie des gaz émis par ledit procédé comme gaz plasmagène.

10. Procédé selon l'une quelconque des revendications précédentes, **caractérisé en ce que** ledit procédé comprend une étape supplémentaire consistant à filtrer, refroidir et/ou neutraliser ladite solution S₂.

11. Dispositif susceptible d'être mis en oeuvre dans le cadre d'un procédé selon l'une quelconque des revendications précédentes, comprenant :
- un réacteur ;
- une torche à plasma et notamment une torche à plasma à arc soufflé ;
- des 1^{ers} moyens aptes à amener la solution S₂ telle que définie à la revendication 1, 4 ou 5, dans ledit réacteur ;
- des 2^{nds} moyens aptes à introduire la solution S₁ telle que définie à la revendication 1 ou 2, dans le plasma généré à partir de ladite torche à plasma, lesdits 2^{nds} moyens étant différents desdits 1^{ers} moyens ; et
- des moyens aptes à alimenter la torche à plasma avec au moins un gaz plasmagène et éventuellement avec au moins un gaz secondaire.

12. Dispositif selon la revendication 11, **caractérisé en ce qu'**il comprend un condenseur et éventuellement un filtre à air.

13. Dispositif selon la revendication 11 ou 12, **caractérisé en ce qu'**il comprend un système apte à assurer le refroidissement de la solution S₂.

14. Dispositif selon l'une quelconque des revendications 11 à 13, **caractérisé en ce qu'**il comprend un système apte à assurer la filtration de la solution S₂.

15. Dispositif selon l'une quelconque des revendications 11 à 14, **caractérisé en ce qu'**il comprend des moyens aptes à contrôler et ajuster le pH de la solution S₂.

## Patentansprüche

1. Verfahren zur Behandlung einer Lösung S₁ genannten flüssigen Lösung, einen darin bestehenden Schritt umfassend, die genannte Lösung S₁ hineinzuspritzen in ein Plasma, eingetaucht in eine von der Lösung S₁ verschiedene Lösung, Lösung S₂ genannt.

2. Verfahren nach Anspruch 1, **dadurch gekennzeichnet, dass** die genannte Lösung S₁ eine Lösung ist, die organische Stoffe enthält, die mit Mineralien verbunden sind oder nicht, wobei die genannte Lösung eventuell ausgewählt werden kann aus einer Gruppe, gebildet durch eine aus Kläranlagen stammende Lösung oder Schlämme aus Kläranlagen, Abwässer, Altöle, flüssige aushaltsabfälle, flüssige Medizin- oder Hospitalabfälle, flüssige Industrieabfälle und aus Kernkraftanlagen stammende flüssige Abfälle.

3. Verfahren nach Anspruch 1 oder 2, **dadurch gekennzeichnet, dass** das genannte Plasma ein geblasenes Lichtbogenplasma ist.

4. Verfahren nach einem der Ansprüche 1 bis 3, **dadurch gekennzeichnet, dass** die genannte Lösung S₂ eine wässrige oder salzige Lösung und vorteilhafterweise Wasser ist.

5. Verfahren nach einem der vorhergehenden Ansprüche, **dadurch gekennzeichnet, dass** die genannte Lösung S₂ wenigstens einen die organischen Reststoffe zerstörenden Zusatzstoff enthält.

6. Verfahren nach einem der vorhergehenden Ansprüche, **dadurch gekennzeichnet, dass** es aufeinanderfolgende Schritte umfasst, darin bestehend ;
a) ein wie in Anspruch 1 oder 3 definiertes Plasma zu erzeugen ;
b) das in Schritt (a) erzeugte Plasma in eine wie in Anspruch 1, 4 oder 5 definierte Lösung S₂ einzutauchen ;
c) die wie in Anspruch 1 oder 2 definierte Lösung ins Innere des so eingetauchten Plasmas einzuführen.

7. Verfahren nach einem der vorhergehenden Ansprüche, **dadurch gekennzeichnet, dass** das genannte Plasma ausgewählt wird aus einer Gruppe, die gebildet wird durch ein Argonplasma, ein Heliumplasma, ein Stickstoffplasma und eine Plasma aus einem ihrer Gemische.

8. Verfahren nach einem der Ansprüche 1 bis 6, **dadurch gekennzeichnet, dass** das genannte Plasma ausgewählt wird aus der Gruppe, die gebildet wird durch ein Argon/Sauerstoff-Plasma, ein Helium/Sauerstoff-Plasma und ein Stickstoff/Sauerstoff-Plasma.

9. Verfahren nach einem der Ansprüche 1 bis 6, **dadurch gekennzeichnet, dass** das genannte Plasma alle oder einen Teil der durch das genannte Verfahren als Plasmagas abgeblasenen Gase recycelt.

10. Verfahren nach einem der vorhergehenden Ansprüche, **dadurch gekennzeichnet, dass** das genannte Verfahren einen zusätzlichen Schritt umfasst, darin bestehend, die genannte Lösung S₂ zu filtern, zu kühlen und/oder zu neutralisieren.

11. Vorrichtung für den Einsatz im Rahmen eine Verfahrens nach einem der vorhergehenden Ansprüche, umfassend :
- einen Reaktor ;
- einen Plasmabrenner und insbesondere einen Plasmabrenner mit geblasenem Lichtbogen;
- erste Einrichtungen um die Lösung S₂ wie definiert in Anspruch 1, 4 oder 5 dem Reaktor zuzuführen ;
- zweite Einrichtungen um die Lösung S₁ wie definiert in Anspruch 1 oder 2 in das von der Plasmafackel erzeugte Plasma einzuführen, wobei die zweiten Einrichtungen verschieden sind von den ersten Einrichtungen ; und
- geeignete Einrichtungen, um die Plasmafackel mit wenigstens einem Plasmagas und eventuell einem Sekundärgas zu versorgen.

12. Vorrichtung nach Anspruch 11, **dadurch gekennzeichnet, dass** sie einen Kondensor und eventuell einen Luftfilter umfasst.

13. Vorrichtung nach Anspruch 11 oder 12, **dadurch gekennzeichnet, dass** sie ein System zum Kühlen der Lösung S₂ umfasst.

14. Vorrichtung nach einem der Ansprüche 11 bis 13, **dadurch gekennzeichnet, dass** es ein System zum Filtern der Lösung S₂ umfasst.

15. Vorrichtung nach einem der Ansprüche 11 bis 14, **dadurch gekennzeichnet, dass** sie Einrichtungen zum Kontrollieren und Justieren des pH-Werts der Lösung S₂ umfasst.

## Claims

1. Method for treating a liquid solution designated as solution S₁ comprising a step consisting in injecting said solution S₁ into the core of a plasma immersed in a second liquid solution designated as solution S₂ separate from said solution S₁.

2. Method according to claim 1, **characterized in that** said solution S₁ is a solution containing organic materials either bound or not to minerals, said solution may optionally be selected from the group consisting of a solution from waste water purification plants or from sludges of waste water purification plants, from waste waters, from waste oils, from domestic liquid effluents, from medical or hospital liquid effluents, from industrial liquid effluents and from liquid effluents from nuclear plants.

3. Method according to claim 1 or 2, **characterized in that** said plasma is a blown arc plasma.

4. Method according to any of claims 1 to 3, **characterized in that** said solution S₂ is an aqueous or saline solution and advantageously water.

5. Method according to any of the preceding claims, **characterized in that** said solution S₂ contains at least one additive ensuring destruction of the residual organic materials.

6. Method according to any of the preceding claims, **characterized in that** it comprises the successive steps of:
a) generating a plasma as defined in claim 1 or 3;
b) immersing the plasma generated in step (a) in a solution S₂ as defined in claim 1, 4 or 5;
c) introducing the solution S₁ as defined in claim 1 or 2 into the core of the thereby immersed plasma.

7. Method according to any of the preceding claims, **characterized in that** said plasma is selected from the group consisting of an argon plasma, a helium plasma, a nitrogen plasma or a plasma of one of their mixtures.

8. Method according to any of claims 1 to 6, **characterized in that** said plasma is selected from the group consisting of an argon/oxygen plasma, a helium/oxygen plasma and a nitrogen/oxygen plasma.

9. Method according to any of claims 1 to 6, **characterized in that** said plasma recycles all or part of the gases emitted by said method as a plasma gas.

10. Method according to any of the preceding claims, **characterized in that** said method comprises an additional step of filtering, cooling and/or neutralizing said solution S₂.

11. Device which may be applied within the scope of a method according to any of the preceding claims, comprising:
- a reactor;
- a plasma torch and notably a blown arc plasma torch;
- first means capable of bringing the solution S₂ as defined in claim 1, 4 or 5, into said reactor;
- second means capable of introducing the solution S₁ as defined in claim 1 or 2, into the plasma generated from said plasma torch, said second means being different from said first means; and
- means capable of supplying the plasma torch with at least one plasma gas and optionally with at least one secondary gas.

12. Device according to claim 11, **characterized in that** it comprises a condenser and optionally an air filter.

13. Device according to claim 11 or 12, **characterized in that** it comprises a system capable of ensuring the cooling of the solution S₂.

14. Device according to any of claims 11 to 13, **characterized in that** it comprises a system capable of ensuring the filtration of the solution S₂.

15. Device according to any of claims 11 to 14, **characterized in that** it comprises means capable of monitoring and adjusting the pH of the solution S₂.
